# EUROPEAN PATENT APPLICATION

(11) **EP 4 415 349 A1**
(43) Date of publication of application: **14.08.2024**
(21) Application number: 24154368.5
(22) Date of filing: 29.01.2024
(51) Int. Cl.: H04N 7/15, G06T 15/04

(54) **MULTI-USER COLLABORATION SYSTEM AND MULTI-USER COLLABORATION METHOD**

(30) Priority: 10.02.2023 TW 112104706
(71) Applicant: Optoma Corporation, New Taipei City (TW)
(72) Inventor: Wang, Wen-Tai, 231633 New Taipei City (TW)
(74) Representative: Ter Meer Steinmeister & Partner

(57) **Abstract**

A multi-user collaboration system (10) includes a first terminal device (100) and a second terminal device (200). At least one of the first terminal device and the second terminal device at least comprises an input device, a storage unit and a processing unit. The input device receives image information, wherein the image information includes grid information and dimensional mapping information of a three-dimensional, 3D, object. The storage unit stores at least one texture of the 3D object. The processing unit selects the at least one texture of the 3D object stored in the storage unit, wherein the at least one of the first terminal device and the second terminal device displays an image comprising the 3D object according to the image information and the at least one texture. And a multi-user collaboration method adapted for the multi-user collaboration system is provided.

## Description

This application claims the priority benefit of Taiwan application serial no. 112104706, filed on February 10, 2023.

### BACKGROUND

### Technical Field

The disclosure relates to communication technology; more particularly, to a multi-user collaboration system and a multi-user collaboration method.

### Description of Related Art

With the rise of the trend of working from home (WFH), more and more people conduct meetings through video conferencing software. The conventional video conferencing software has many disadvantages. For instance, in most cases, only the moderator of the conventional video conferencing software has the right to share slides or images. The regular participants are unable to share images intended to be displayed with other participants. In order to solve said issue, an interactive flat panel (IFP) may be applied to conduct the video conferencing. The IFP allows the receipt of information from each client and is able to share the information with all of the clients in real time.

The clients may apply the IFP to perform multi-user collaboration operations. However, when the amount of data of the shared image is excessively large, the transmission performance or the collaboration performance may be reduced. For instance, when a client shares a three-dimensional (3D) image with another client based on the IFP, the transmission of the 3D image may occupy most of the communication resources and cause a delay in the network between each client and the IFP.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

One or more embodiments of the disclosure provide a multi-user collaboration system and a multi-user collaboration method capable of providing a multi-user collaboration mechanism on a three-dimensional object for a plurality of terminal devices.

Other objectives and advantages of the disclosure may be further understood from the technical features disclosed in the disclosure.

The object is solved by the features of the independent claims Preferred embodiments are given in the dependent claims.

In order to achieve one, some, or all of the aforementioned objectives or other objectives, an embodiment of the disclosure provides a multi-user collaboration system that includes a first terminal device and a second terminal device. The at least one of the first terminal device and the second terminal device at least comprises an input device, a storage unit and a processing unit. The input device receives image information. The image information comprises grid information and dimensional mapping information of a three-dimensional (3D) object. The storage unit stores at least one texture of the 3D object. The processing unit selects the at least one texture of the 3D object stored in the storage unit. The at least one of the first terminal device and the second terminal device displays an image comprising the 3D object according to the image information and the at least one texture.

In an embodiment of the disclosure, the multi-user collaboration system may further comprise a server.

The server may communicate with the first terminal device and the second terminal device and may provide the image information to the at least one of the first terminal device and the second terminal device.

The server may comprise a texture database.

The server may receive the 3D object.

The server may determine whether the texture database comprises the at least one texture.

In response to determining that the texture database does not comprise the at least one texture, the server may transmit the at least one texture of the received 3D object to the at least one of the first terminal device and the second terminal device.

The server may receive a first operation command on the 3D object from the second terminal device.

The server may update the grid information and the dimensional mapping information according to the first operation command, and may transmit the updated grid information and the updated dimensional mapping information to the first terminal device.

The first terminal device may update the 3D object in the image according to the updated grid information and the updated dimensional mapping information.

In an embodiment of the disclosure, the server may transmit the at least one texture to the first terminal device before providing the image information to the first terminal device.

In an embodiment of the disclosure, the multi-user collaboration system may further include a third terminal device communicating with the server.

The server may receive a first operation command on the 3D object from the second terminal device and may receive a second operation command on the 3D object from the third terminal device.

In response to a first authority level of the second terminal device being higher than a second authority level of the third terminal device, the server may enable the first operation command and may disable the second operation command.

In an embodiment of the disclosure, the server may disable the second operation command during a predetermined time slot after receiving the first operation command.

In an embodiment of the disclosure, the first operation command may include at least one of following commands: a clicking command, a rotating command, a zooming command, a moving command, a dividing command, and a combining command.

In an embodiment of the disclosure, the server may be further configured to obtain a first image layer and may determine whether the first image layer includes a dynamic object.

In response to determining that the first image layer includes the dynamic object, the server may crop a part of the dynamic object from the first image layer.

According to the first operation command, the server may perform an image processing operation on the part of the dynamic object to update the grid information and the dimensional mapping information.

In an embodiment of the disclosure, the dynamic object may include the 3D object.

In an embodiment of the disclosure, the server may be further configured to obtain a second image layer and a third image layer.

The server may determine whether each of the second image layer and the third image layer includes a dynamic object.

In response to determining that neither the second image layer nor the third image layer may include the dynamic object.

The server may overlap the second image layer and the third image layer to generate a fourth image layer.

The server may transmit the fourth image layer to the first terminal device according to the image information.

In an embodiment of the disclosure, the server may input the 3D object to a machine learning model to generate the at least one texture, the grid information, the dimensional mapping information, and a classification label of the 3D object.

In an embodiment of the disclosure, the server may receive a query command. In response to the query command matching the classification label, the server may output a query response corresponding to the classification label.

Here, the query response may include an option corresponding to the 3D object.

In response to the option being selected, the server may generate the image information according to the 3D object.

In order to achieve one, some, or all of the aforementioned objectives or other objectives, another embodiment of the disclosure provides a multi-user collaboration method adapted for a multi-user collaboration system. The multi-user collaboration system comprises a first terminal device and a second terminal device. The multi-user collaboration method that includes following steps: receiving an image information by at least one of the first terminal device and the second terminal device, wherein the image information comprises grid information and dimensional mapping information of a 3D object; selecting, by the at least one of the first terminal device and the second terminal device, at least one texture of the 3D object stored in the at least one of the first terminal device and the second terminal device; and displaying, by the at least one of the first terminal device and the second terminal device, an image comprising the 3D object according to the image information and the at least one texture.

In view of the above, the server of the multi-user collaboration system provided in one or more embodiments of the disclosure may transmit the texture of the 3D object to each terminal device in the multi-user collaboration system in advance. When the multi-user collaboration task starts to be performed on the 3D object, the server is no longer required to transmit the texture of the 3D object to each terminal device but required to transmit the grid information and the dimensional mapping information of the 3D object to each terminal device, whereby the 3D object displayed by each terminal device may be updated.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic view illustrating a multi-user collaboration system according to an embodiment of the disclosure.
FIG. 2 is a flowchart illustrating a method of preloading a new texture to each terminal device according to an embodiment of the disclosure.
FIG. 3 is a flowchart illustrating a method of performing a multi-user collaboration task on a 3D object according to an embodiment of the disclosure.
FIG. 4 is a schematic view illustrating options of a 3D object of an embodiment of the disclosure.
FIG. 5 is a schematic view of performing an image processing operation on a static image layer according to an embodiment of the disclosure.
FIG. 6 is a schematic view of performing an image processing operation on a dynamic image layer according to an embodiment of the disclosure.
FIG. 7 is a schematic view illustrating a 3D object in an image of an embodiment of the disclosure.
FIG. 8 flowchart illustrating a multi-user collaboration method of an embodiment of the disclosure.

### DESCRIPTION OF THE EMBODIMENTS

It is to be understood that other embodiment may be utilized and structural changes may be made without departing from the scope of the appended claims. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

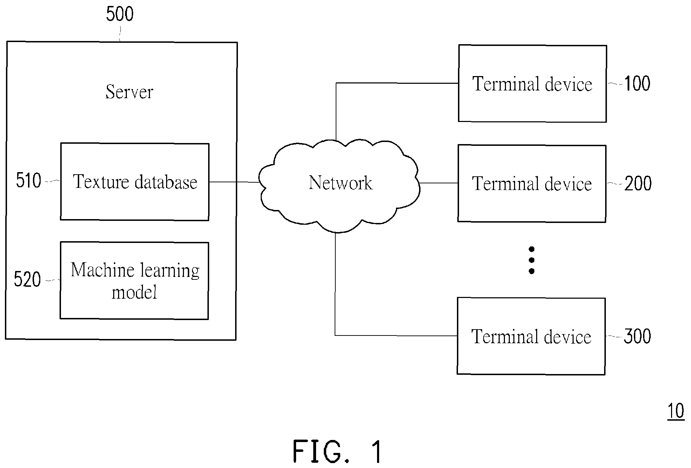

FIG. 1 is a schematic view illustrating a multi-user collaboration system 10 according to an embodiment of the disclosure. The multi-user collaboration system 10 is, for instance, an IFP system. The multi-user collaboration system 10 may include a server 500 and a plurality of terminal devices acting as clients, such as a terminal device 100, a terminal device 200, and a terminal device 300. The server 500 may, by applying the network, communicate with the terminal device 100, the terminal device 200, and the terminal device 300.

The server 500 is, for instance, a cloud server. The server 500 may be implemented in form of one single computation device or a plurality of computation devices. The server 500 may have a processing unit (e.g., including but not limited to at least one processor. The processor may be a central processing unit (CPU), or other programmable general-purpose or special-purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA), or other similar elements, or a combination of the elements thereof.), a communication unit (e.g., including but not limited to various communication chips, mobile communication chips, Bluetooth chips, Wi-Fi chips, and so on), and a storage unit (e.g., including but not limited to a movable random access memory, a flash memory, a ROM, a PROM, a EPROM and a EEPROM memory, a dynamic random-access memory (DRAM), a static random-access memory (SRAM), a hard disk, and so on), and other necessary components for running the server 500. In an embodiment, the storage unit of the server 500 may store a texture database 510 and a machine learning model 520. The machine learning model 520 includes at least one program that can find patterns or make decisions from a previously unseen dataset.

The terminal device 100 (or the terminal device 200/the terminal device 300) is, for instance, IFP (for example a display device with touch panel for interactive operation), a personal computer, a notebook computer, a smart phone, or a tablet computer. The terminal device 100 (or the terminal device 200/the terminal device 300) may have a processing unit (e.g., including but not limited to at least one processor. The processor may be a central processing unit (CPU), or other programmable general-purpose or special-purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA), or other similar elements, or a combination of the elements thereof.), a communication unit (e.g., including but not limited to various communication chips, mobile communication chips, Bluetooth chips, Wi-Fi chips, and so on), and a storage unit (e.g., including but not limited to a and a movable random access memory, a flash memory, a ROM, a PROM, a EPROM and a EEPROM memory, a dynamic random-access memory (DRAM), a static random-access memory (SRAM), a hard disk, and so on), and other necessary components for running the terminal device 100 (or the terminal device 200/the terminal device 300). In an embodiment, the terminal device 100 (or the terminal device 200/the terminal device 300) may include an input/output device which comprises an input device and output device. The input device is configured to receive information, the output device is configured to output information. The input device may include at least one chip or circuit electrically connected with the communication unit for receiving image information, a keyboard, a mouse, a touch screen, or the like. The output device may include a display or a projector communicatively connected with the terminal device or the like. The terminal device 100, the terminal device 200, and the terminal device 300 may have the same hardware configuration and function above.

The texture database 510 of the server 500 may store various textures of a 3D object. In 3D tech field, the person skilled in the art understands definition regarding to texture. The texture is a data parameter, such as a texture identification code, albedo, metal, glossiness/roughness, opacity, and/or color, etc. The texture database 510 may be synchronized to each terminal device in the multi-user collaboration system 10. Each of the terminal device may store at least one texture of the 3D object transmitted from the texture database 510. If the server 500 and the terminal device 100 are taken as an example, the server 500 may transmit the texture not obtained by the terminal device 100 to the terminal device 100 in a fixed period. On the other hand, the terminal device 100 may periodically access the texture database 510 in a fixed period to check whether the texture database 510 includes any texture that is not yet obtained by the terminal device 100. If the texture database 510 includes a texture that the terminal device 100 has not acquired, the terminal device 100 may request the server 500 to transmit the texture to the terminal device 100. In other words, the textures stored in the texture database 510 will be synchronized to each terminal device. If the specific texture in the texture database 510 has not been synchronized to each terminal device, it means that the specific texture is newly acquired by the server 500.

More specifically, a multi-user collaboration method is adapted for a multi-user collaboration system 10. The terminal device 100 or other terminal device (200, 300) receives an image information from the server 500. The image information comprises grid information and dimensional mapping information of a three-dimensional (3D) object. The terminal device 100 selects at least one texture of the 3D object stored in the terminal device 100. The terminal device 100 displays an image comprising the 3D object according to the image information and the at least one texture.

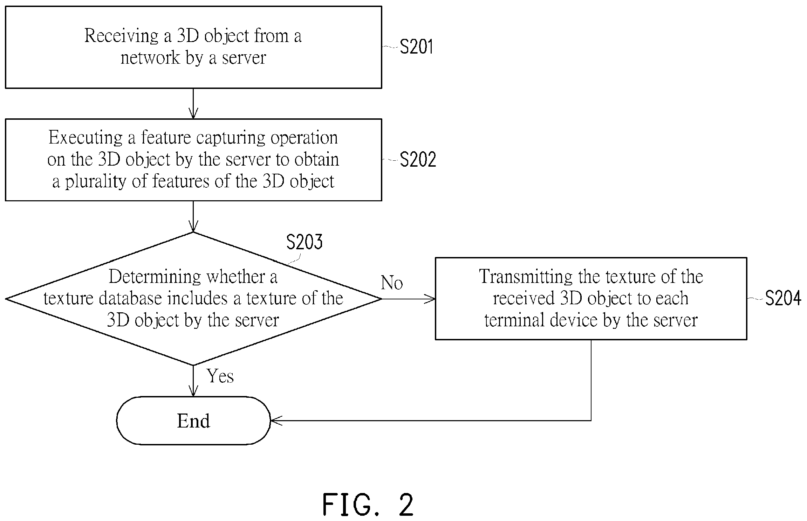

FIG. 2 is a flowchart illustrating a method of preloading a new texture to each terminal device according to an embodiment of the disclosure. After the server 500 receives a new 3D object, the server 500 may preload the texture of the 3D object to each terminal device in the multi-user collaboration system 10. Therefore, when the terminal devices start multi-user collaboration tasks on the new 3D object, the server 500 no longer needs to transmit the texture of the new 3D object to each terminal device, so as to save the data download amount of each terminal device. At the same time, the communication resources consumed by the multi-user collaboration system 10 may be saved.

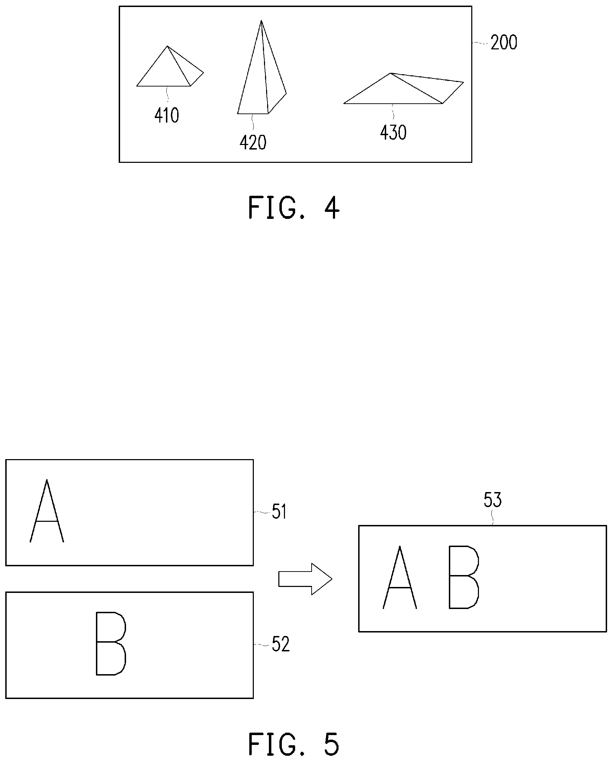

For instance, in the exemplary terminal device 100, in step S201, the server 500 may receive a 3D object from the network, where the 3D object may include the texture, grid information, dimension mapping information (i.e., UV mapping, which refers to texture mapping to a 3D object and is a term well known to those skilled in the art), and other information. The 3D object is, for instance, uploaded to the server 500 by a terminal device (e.g., the terminal device 100, 200, or 300) by means of the network. The 3D object is, for instance, a 3D object 410 shown in FIG. 4. The server 500 may selectively store the 3D object 410 in the storage unit of the server 500 for subsequent use.

In step S202, the server 500 may execute a feature capturing operation on the 3D object 410 to obtain a plurality of features of the 3D object 410, where the features may include a texture, grid information, dimensional mapping information, a classification label, and other features of the 3D object 410. The classification label may represent how the server 500 classifies the 3D object 410. For instance, if the 3D object 410 is a pyramid, then the classification label of the 3D object 410 may be a quadrangular pyramid. That is, the server 500 may classify the pyramid into the classification of quadrangular pyramids.

In an embodiment, the server 500 may input the 3D object 410 to the machine learning model 520 to output the features of the 3D object 410 from the machine learning model 520, where the features may include the texture, the grid information, the dimensional mapping information, the classification label, and other features of the 3D object 410. In an embodiment, the server 500 may train the machine learning model 520 according to historical data. For instance, the historical data may include the 3D object and the label corresponding to the 3D object, where the label may include the texture, the grid information, the dimensional mapping information, the classification label, and other features of the 3D object. The server 500 may train the machine learning model 520 based on a supervised learning algorithm according to a plurality of historical data.

In step S203, the server 500 may determine whether the texture database 510 includes the texture of the 3D object 410. If the texture database 510 includes the texture of the 3D object 410, it means that the texture has been synchronized to each terminal device. Accordingly, the server 500 may end the process. If the texture database 510 does not include the texture of the 3D object 410, it means that the texture has not been synchronized to each terminal device. Accordingly, the server 500 may execute step S204.

In step S204, the server 500 may transmit the texture of the received 3D object 410 to each terminal device (i.e., the terminal device 100, 200, and/or 300); that is, the server 500 may preload the texture of the received 3D object 410 to each terminal device.

The server 500 may share an image to the terminal device 100, the terminal device 200, and the terminal device 300, where the image may include a 3D object that can be operated. When executing a multi-user collaborative task on the 3D object, the terminal device with authority may operate the 3D object to change the way in which the 3D object is presented in the image. For instance, the terminal device 100, the terminal device 200, and the terminal device 300 may share images including geometric figures. When a user applies the terminal device 200 to rotate the geometric figures in the image, the geometric figures in the image displayed by the terminal device 100 and the terminal device 300 also rotate accordingly.

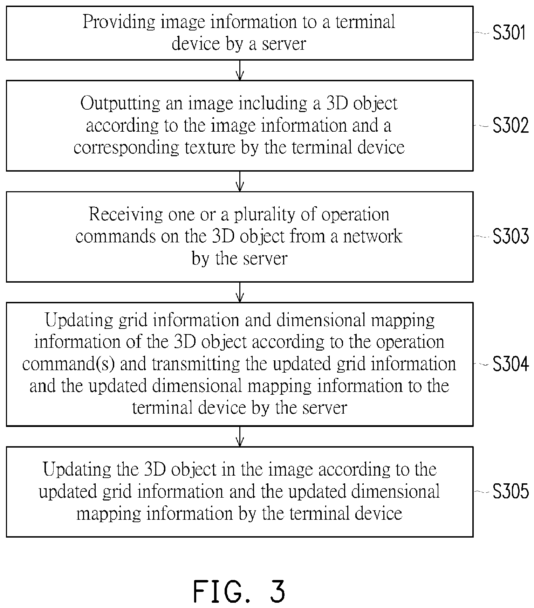

FIG. 3 is a flowchart illustrating a method of performing a multi-user collaboration task on a 3D object 410 according to an embodiment of the disclosure. In step S301, the server 500 may provide the image information to the terminal device 100 (and/or the terminal device 200/the terminal device 300), where the image information may include the grid information and the dimensional mapping information of the 3D object 410. The image information may further include a dynamic or static image layer. It should be noted that, before step S301 is performed, the texture database 510 of the server 500 has obtained the texture of the 3D object 410, and the texture has been synchronized to each terminal device. Therefore, in step S301, the server 500 is not required to transmit the texture of the 3D object 410 to each terminal device again. In addition, the terminal device 100 is taken as an example, and the server 500 may transmit an index of the texture of the 3D object 410 to the terminal device 100 according to image information (e.g., the grid information and the dimensional mapping information). According to the index, the terminal device 100 may select the texture applied to the 3D object 410 from the obtained textures. Thereby, the terminal device 100 only needs to download the grid information and the dimensional mapping information together with the pre-downloaded texture to present the 3D object when executing the multi-user real time collaboration; that is, the terminal device 100 does not need to download the texture data in real time. As such, the network delay issue occurring during the multi-user collaboration may be mitigated.

In an embodiment, the server 500 may receive a command and select a specific 3D object 410 according to the command, so as to provide the terminal device 100 with the image information (e.g., the grid information and the dimensional mapping information) of the 3D object 410. Specifically, the server 500 may receive from the network, for instance, a query command transmitted by the terminal device 200, for instance. In response to the query command, the server 500 may match a specific classification label with the query command and output a query response corresponding to the classification label to the terminal device 200 that issues the query command, where the query response may include an option corresponding to the classification label. The server 500 may be selected by the terminal device 200 in response to the option of 3D object 410 to generate the image information according to the 3D object 410 and transmit the image information to each terminal device (e.g., the terminal device 100, the terminal device 200, or the terminal device 300).

For instance, FIG. 4 is a schematic view illustrating options of a 3D object according to an embodiment of the disclosure. It is assumed that terminal device 200 transmits the query command to the server 500 by means of the network, where the query command indicates the classification label of "pyramids". After the server 500 receives the query command, the server 500 may, in response to the query command matching the classification label of "pyramids", provide the terminal device 200 with the option of the 3D object (such as the 3D object 410, the 3D object 420, and the 3D object 430 shown in FIG. 4) corresponding to "pyramids" according to the query response. If the terminal device 200 selects the 3D object 410 and notifies the server 500 of the selected result, the server 500 may generate the image information according to the selected 3D object 410 (i.e., the grid information and the dimensional mapping information of the 3D object 410) and provide the image information to each terminal device (e.g., the terminal device 100, the terminal device 200, or the terminal device 300).

As shown in FIG. 3, in step S302, the terminal device 100 may output the image including the 3D object 410 according to the image information and the corresponding texture. Specifically, the terminal device 100 may output the image layer included in the image information as a background of the image. On the other hand, the terminal device 100 may calculate grids of the 3D object 410 according to the grid information and the dimensional mapping information of the image information. Next, the terminal device 100 may render the texture corresponding to the 3D object 410 onto the grids, thereby forming the 3D object 410 in the image.

In an embodiment, if the server 500 obtains a plurality of static image layers, the server 500 may merge the static image layers into one single merged image layer and then transmit the merged image layer to the terminal device 100 according to image information (e.g., the dynamic or static image layers), so that the terminal device 100 outputs the merged image layer as the background of the image. Since the static image layers obtained by the server 500 do not change continuously, the server 500 only needs to transmit the merged image layer to the terminal device 100 once within a period of time.

FIG. 5 is a schematic view of performing an image processing operation on a static image layer according to an embodiment of the disclosure. In an image layer 51 and an image layer 52 obtained by the server 500, the image layer 51 includes a static text "A", and the image layer 52 includes a static text "B". The server 500 may obtain the image layer 51 or the image layer 52 from the network, and the server 500 may also generate the image layer 51 or the image layer 52 by itself. For instance, the server 500 may pre-store the image layer 51 or the image layer 52. If the server 500 receives a command for selecting the image layer 51 or the image layer 52 from a terminal device (e.g., the terminal device 100, the terminal device 200, or the terminal device 300), then the server 500 may retrieve the image layer 51 or the image layer 52 from the storage unit according to the command.

The server 500 may inspect whether the image layer 51 and the image layer 52 include any dynamic object, where the dynamic object is, for instance, an image (e.g., a real-time human face image used in a video conference), a two-dimensional (2D) object, or a 3D object. If neither the image layer 51 nor the image layer 52 includes any dynamic object, the server 500 may determine that the image layer 51 and the image layer 52 are the static image layers. Accordingly, the server 500 may overlap the image layer 51 and the image layer 52 to generate an image layer 53. The server 500 may transmit the image layer 53 to the terminal device 100 in advance according to the image information (e.g., the dynamic or the static image layer). The terminal device 100 may directly use the image layer 53 (i.e., obtained by overlapping the static image layers) during the multi-user collaboration instead of overlapping the static image layers during the multi-user collaboration. Thereby, the data processing amount may be reduced.

As shown in FIG. 3, in step S303, the server 500 may receive one or a plurality of operation commands on the 3D object 410 from the network. The one or the plurality of operation commands may come from a terminal device in the multi-user collaboration system 10 (e.g., the terminal device 100, the terminal device 200, or the terminal device 300). The operation command(s) may include but is not limited to a clicking command, a rotating command, a zooming command, a moving command, a dividing command, or a combining command. The operation command(s) may further serve to instruct the server 500 to mark the 3D object 410 in the image by texts.

In step S304, the server 500 may update the grid information and the dimensional mapping information of the 3D object 410 according to the operation command(s) and transmit the updated grid information and the updated dimensional mapping information to the terminal device 100. In step S305, the terminal device 100 may update the 3D object 410 in the image according to the updated grid information and the updated dimensional mapping information. Specifically, the terminal device 100 may update the grids of the 3D object 410 according to the updated grid information and the updated dimensional mapping information. After that, the terminal device 100 may render the texture corresponding to the 3D object 410 into the updated grids to update the 3D object 410 in the image.

The server 500 may set the authority level of each terminal device for accessing the 3D object 410, and the authority level may indicate whether the terminal device is allowed to create, modify, or delete the 3D object 410 or may indicate whether the terminal device is allowed to issue the operation command(s) to the 3D object 410. It is assumed that the authority levels of both the terminal device 200 and the terminal device 300 allow the issuance of the operation command(s) to the 3D object 410, where the authority level of the terminal device 200 is higher than that of the terminal device 300. If the server 500 receives the operation command(s) on the 3D object 410 from the terminal device 200 and receives the operation command(s) on the 3D object 410 from the terminal device 300, then the server 500 may decide to enable the operation command(s) of the terminal device 200 and disable the operation command(s) of the terminal device 300 based on the authority levels.

Specifically, the operation command(s) received by the server 500 may include a timestamp, for instance, a coordinated universal time (UTC) stamp. If the server 500 receives a plurality of operation commands on the 3D object 410, the server 500 may determine the order of the operation commands according to the timestamp and apply the operation commands to the 3D object 410 sequentially.

In an embodiment, the server 500 may classify the received operation command(s) into batches corresponding to the timestamp according to the timestamp. If one batch includes a plurality of operation commands, the server 500 selects the operation command corresponding to the highest authority level from the batch as a selected operation command. The server 500 may merely execute the selected operation command and ignore the other operation commands in the batch. In other words, the server 500 may enable the selected operation command and disable the other operation commands in the batch.

For instance, the server 500 may determine the time difference between the operation command from the terminal device 200 and the operation command from the terminal device 300 according to the timestamp. If the server 500 receives the operation command from the terminal device 300 within a predetermined time slot after receiving the operation command from the terminal device 200, then the server 500 may classify the operation command from the terminal device 200 and the operation command from the terminal device 300 into the same batch. It is assumed that the operation command of the terminal device 200 is to control the 3D object 410 to rotate to the left and the operation command of the terminal device 300 is to control the 3D object 410 to rotate to the right. In response to the authority level of the terminal device 200 being higher than that of the terminal device 300, the server 500 enables the operation command of the terminal device 200 and disables the operation command of the terminal device 300. In other words, the 3D object 410 will rotate to the left but will not rotate to the right.

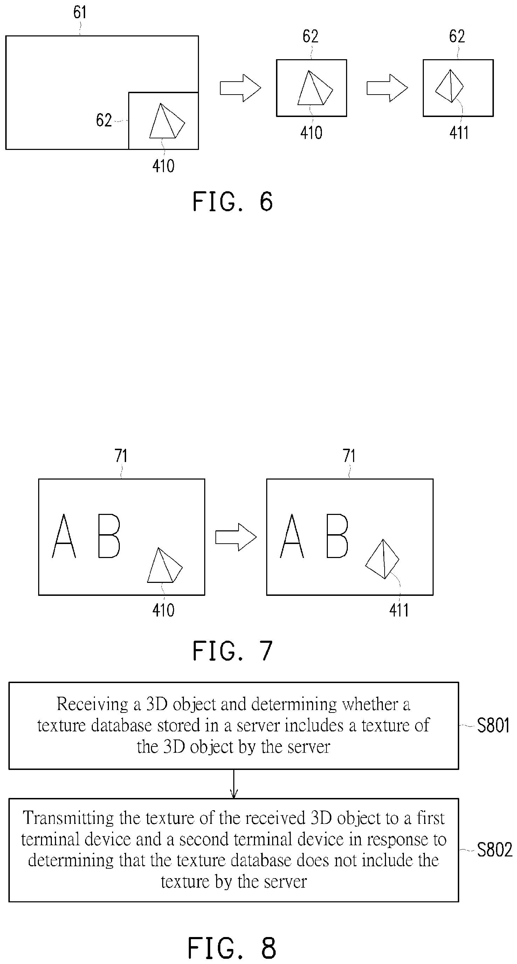

After the server 500 obtains the dynamic image layer including the dynamic object, the server 500 may perform an image processing operation on a part of the dynamic image layer including the dynamic object, so as to save the consumption of computational resources. FIG. 6 is a schematic view of performing an image processing operation on a dynamic image layer according to an embodiment of the disclosure. An image layer 61 may include a dynamic object which is, for instance, the 3D object 410. After obtaining the image layer 61, the server 500 may determine whether the image layer 61 includes any dynamic object. The server 500 may, in response to the image layer 61 including the dynamic object, crop a part 62 of the image layer 61, and the part 62 includes the dynamic object (i.e., the 3D object 410).

After the server 500 receives the operation command on the dynamic object, the server 500 may perform an image processing operation on the part 62 of the image layer 61 according to the operation command to update the grid information and the dimensional mapping information of the dynamic object without the need of performing the image processing operation on the other part of the image layer 61 except for the part 62. As shown in FIG. 6, after receiving the operation command, the server 500 may rotate the 3D object 410 in the part 62 according to the operation command, so as to obtain a 3D object 411.

FIG. 7 is a schematic view illustrating a 3D object 410 in an image 71 according to an embodiment of the disclosure. The image 71 may be output by a terminal device (e.g., the terminal device 100, the terminal device 200, or the terminal device 300) for a user to watch the image 71, where the image 71 is, for instance, generated by overlapping the image layer 53 shown in FIG. 5 and the part 62 of the image layer 61 shown in FIG. 6. When the server 500 rotate the 3D object 410 according to the operation command to obtain the 3D object 411, a viewing angle of the 3D object 410 in the image 71 is also changed into a viewing angle of the 3D object 411.

FIG. 8 is a flowchart illustrating a multi-user collaboration method according to an embodiment of the disclosure, where the multi-user collaboration method may be implemented by the multi-user collaboration system 10 shown in FIG. 1. In step S801, the server receives the 3D object and determines whether the texture database stored in a server includes the texture of the 3D object by the server. In step S802, the texture of the received 3D object is transmitted to the first terminal device and the second terminal device in response to determining that the texture database does not include the texture by the server.

To sum up, the server of the multi-user collaboration system provided in one or more embodiments of the disclosure may perform the feature capturing operation on a new 3D object when receiving the new 3D object, so as to obtain the information including the texture of the 3D object and transmit the texture to terminal device in the multi-user collaboration system in advance. When the system starts to execute the multi-user collaborative task on the image shared by a plurality of terminal devices, the terminal device may operate the 3D object in the image according to the command to update the information of the 3D object. In the case that each terminal device has obtained the texture of the 3D object in advance, the server is merely required to transmit the updated grid information and the updated dimensional mapping information of the 3D object to each terminal device when the multi-user collaboration task is executed in real time, whereby the 3D object displayed on each terminal device may be updated in real time. Accordingly, the disclosure may be conducive to significantly reducing the communication resources consumed by the multi-user collaborative task performed on the 3D object.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable people skilled in the art to understand the disclosure for various embodiments and with various modifications as are suited to the particular use or implementation contemplated. Therefore, the term "the disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow an inquirer to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by people skilled in the art without departing from the scope of the disclosure as defined by the following claims. Moreover, no element and component in the present disclosure is intended to be dedicated to the public regardless of whether the element or component is explicitly recited in the following claims.

## Claims

1. A multi-user collaboration system, comprising:
a first terminal device (100) and a second terminal device (200), wherein at least one of the first terminal device (100) and the second terminal device (200) at least comprises:
an input device configured to receive image information, wherein the image information comprises grid information and dimensional mapping information of a three-dimensional (3D) object (410);
a storage unit configured to store at least one texture of the 3D object (410); and
a processing unit configured to select the at least one texture of the 3D object stored in the storage unit, wherein the at least one of the first terminal device (100) and the second terminal device (200) is configured to display an image comprising the 3D object (410) according to the image information and the at least one texture.

2. The multi-user collaboration system according to claim 1, further comprising a server (500), wherein the server is configured to communicate with the first terminal device (100) and the second terminal device (200) and provide the image information to the at least one of the first terminal device (100) and the second terminal device (200), wherein the server (500) comprises a texture database (510) and the server (500) is configured to receive the 3D object (410), the server (500) is configured to determine whether the texture database (510) comprises the at least one texture.

3. The multi-user collaboration system according to claim 2, wherein the server (500) is configured
in response to determining that the texture database (510) does not comprise the at least one texture, the server (500) is configured to transmit the at least one texture of the received 3D object (410) to the at least one of the first terminal device (100) and the second terminal device (200), wherein the server (500) is configured to receive a first operation command on the 3D object (410) from the second terminal device (200), the server (500) is configured to update the grid information and the dimensional mapping information according to the first operation command, and transmit the updated grid information and the updated dimensional mapping information to the first terminal device (100), wherein
the first terminal device (100) is configured to update the 3D object in the image according to the updated grid information and the updated dimensional mapping information.

4. The multi-user collaboration system according to claim 2 or 3, wherein the server (500) is configured to transmit the at least one texture to the first terminal device (100) before providing the image information to the first terminal device (100).

5. The multi-user collaboration system according to any one of the preceding claims, further comprising:
a third terminal device (300), configured to communicate with the server (500), wherein
the server (500) is configured to receive a first operation command on the 3D object (410) from the second terminal device (200) and receive a second operation command on the 3D object (410) from the third terminal device (300), wherein
in response to a first authority level of the second terminal device (200) being higher than a second authority level of the third terminal device (300), the server (500) is configured to enable the first operation command and disable the second operation command.

6. The multi-user collaboration system according to claim 5, wherein the server (500) is configured to disable the second operation command during a predetermined time slot after receiving the first operation command.

7. The multi-user collaboration system according to any one of the preceding claims 2-6, wherein the first operation command comprises at least one of following commands: a clicking command, a rotating command, a zooming command, a moving command, a dividing command, and a combining command.

8. The multi-user collaboration system according to any one of the preceding claims 2 -7, wherein the server (500) is configured to obtain a first image layer and determine whether the first image layer comprises a dynamic object, and in response to determining that the first image layer comprises the dynamic object, the server (500) is configured to crop a part of the dynamic object from the first image layer; and
according to the first operation command, the server (500) is configured to perform an image processing operation on the part of the dynamic object to update the grid information and the dimensional mapping information.

9. The multi-user collaboration system according to claim 8, wherein the dynamic object comprises the 3D object.

10. The multi-user collaboration system according to any one of the preceding claims 2-9, wherein the server (500) is configured to obtain a second image layer and a third image layer and determine whether each of the second image layer and the third image layer comprises a dynamic object.

11. The multi-user collaboration system according to claim 10, wherein in response to determining that neither the second image layer nor the third image layer comprises the dynamic object, the server (500) is configured to overlap the second image layer and the third image layer to generate a fourth image layer, and the server (500) is configured to transmit the fourth image layer to the first terminal device according to the image information.

12. The multi-user collaboration system according to any one of the preceding claims 2-11, wherein the server (500) is configured to input the 3D object to a machine learning model (520) to generate the at least one texture, the grid information, the dimensional mapping information, and a classification label of the 3D object (410).

13. The multi-user collaboration system according to claim 12, wherein the server (500) is configured to receive a query command, and in response to the query command matching the classification label, the server (500) is configured to output a query response corresponding to the classification label, wherein the query response comprises an option corresponding to the 3D object (410).

14. The multi-user collaboration system according to claim 13, wherein in response to the option being selected, the server (500) is configured to generate the image information according to the 3D object (410).

15. A multi-user collaboration method adapted for a multi-user collaboration system, wherein the multi-user collaboration system comprises a first terminal device (100) and a second terminal device (200), the multi-user collaboration method comprising:
receiving (S201) an image information by at least one of the first terminal device (100) and the second terminal device (200), wherein the image information comprises grid information and dimensional mapping information of a three-dimensional (3D) object (410);
selecting, by the at least one of the first terminal device (100) and the second terminal device (200), at least one texture of the 3D object (410) stored in the at least one of the first terminal device (100) and the second terminal device (200); and
displaying, by the at least one of the first terminal device (100) and the second terminal device (200), an image comprising the 3D object (410) according to the image information and the at least one texture.
